# EUROPEAN PATENT APPLICATION

(11) **EP 3 062 278 A1**
(43) Date of publication of application: **31.08.2016**
(21) Application number: 15191439.7
(22) Date of filing: 26.10.2015
(51) Int. Cl.: G06Q 30/02

(54) **PRODUCT ORDERING SYSTEM AND PRODUCT ORDERING METHOD THEREOF**

(30) Priority: 26.02.2015 TW 104106419
(71) Applicant: Aircom Pacific Inc, San Jose, CA 95113 (US)
(72) Inventor: SHIH, Daniel, Dublin, CA 94568 (US)
(74) Representative: Arpe Fernandez, Manuel de

(57) **Abstract**

Provided are a product ordering system and a product ordering method thereof. The system includes a display device, a selection unit and a cloud server. The display device includes a display screen, a capture unit and a first transmission unit. The display screen displays multimedia information content, wherein a part of the multimedia information content is captured by the capture unit and transmitted by the first transmission unit. The cloud server includes a database, a second transmission unit and a processor. The captured part being transmitted to the second transmission unit by the first transmission unit, and the processor matches the captured part obtained from the second transmission unit with multimedia features stored in the database, and then controls the second transmission unit to transmit advertising multimedia information content corresponding to the multimedia feature that corresponds to the part of the multimedia information content to the display device.

## Description

### Field

The present invention relates to a product ordering system and a product ordering method thereof, specifically to a product ordering system and a product ordering method thereof which provides profile-based aimed advertising and real time ordering.

### Background

Due to the popularity of devices for playing multimedia information contents such as display devices, watching multimedia information contents has become a great part of people's lives. However, it is inevitable to see advertisements on screen during a TV show or movie, but since most of the audiences are not interested in the products of the advertisements, it often results in a TV advertising effectiveness loss, or audience loss. According to an online survey by Google and TNS, 85% of respondents said that they will pay more attention if the advertisements met their interests. Therefore, the measures to provide a win-win situation for the media, audience, and advertiser have become an important subject nowadays.

In addition, when people are watching an advertisement, the advertised goods are too diverse and most cannot attract the consumers to purchase right away on the spur of the moment. On the other hand, when people are interested in the advertised goods while watching TV or a movie, the desire of purchase fade quickly due to the lack of purchase information and routs, or unable to purchase right away. Therefore, the development of the present invention is aimed to provide advertising information that the audience will be highly interested.

### Summary

To solve the problems in the conventional arts, it is a primary object of the present invention to provide a product ordering system and a product ordering method thereof to solve the problem of advertising effectiveness loss or audience loss caused by the interruption of irrelevant advertisements during multimedia contents, and the problem that the desire of purchase fade quickly due to the lack of purchase routs and unable to purchase right away.

To achieve the above object, the product ordering system according to the present invention comprising a display device, a selection unit, and a cloud server. The display device may be arranged to connect a multimedia output device so as to obtain a plurality of multimedia information contents, and comprising a display screen, a capture unit, and a first transmission unit, and the display screen can display one of the multimedia information contents, and the capture unit can capture a partial multimedia information content from the multimedia information content displayed, and the partial multimedia information content may be transmitted by the first transmission unit. The selection unit may be arranged to generate a selection signal. The cloud server may be arranged to connect the display device, and comprising a database, a second transmission unit, and a processor. The database may be arranged to store multimedia features of each multimedia information contents and a plurality of advertising multimedia information contents corresponding to each multimedia features. The second transmission unit may be arranged to receive the partial multimedia information content. The processor may be arranged to electrically connect the database and the second transmission unit so as to obtain the partial multimedia information content and compare it with the multimedia features. When the processor determines that one of the multimedia features matches the partial multimedia information content, the processor controls the second transmission unit to transmit the advertising multimedia information content that corresponds to the matched multimedia feature to the display device to display the advertising multimedia information content. Wherein, when a user selects the corresponding advertising multimedia information content through the selection unit, the display device can generate order information according to the selection signal, and the first transmission unit transmits the order information to the cloud server to order the product which corresponds to the advertising multimedia information content.

Preferably, the capture unit may be an image capture unit, the partial multimedia information content may be an image feature. The multimedia features may be item features respectively, and the processor may compare the image feature with the item features to determine the item feature that matches the image feature.

Preferably, the capture unit may be a timer, the partial multimedia information content may be a current playback time of the multimedia information content. The multimedia features may be a plurality of predetermined points in time respectively, and the processor compares the current playback time of the multimedia information content with the predetermined points in time to determine the multimedia feature that matches the current playback time of the multimedia information content.

Preferably, the display screen may include a display interface comprising a main display area and at least one sub display area. The main display area may display the multimedia information content, and the sub display area may display the corresponding advertising multimedia information content, and the multimedia information content and the corresponding advertising multimedia information content may be displayed simultaneously.

Preferably, the order information may comprise seating information and product information that corresponds to the advertising multimedia information content, and a supplier may provide the product to the user according to the seating information and the product information received by the cloud server.

Preferably, the database may further store user information and login information of the user. The display device may connect the cloud server according to the login information, the order information may comprise the user information and product information of the corresponding advertising multimedia information content, and a supplier may provide the product to the user according to the user information and the product information received by the cloud server.

To achieve another object, the product ordering method according to the present invention comprising the following steps of: obtaining a plurality of multimedia information contents by connecting a display device to a multimedia output device, display one of the multimedia information contents, and capture and transmit a partial multimedia information content of the multimedia information content displayed; arranging a cloud server to receive the partial multimedia information content from the display device and store multimedia features of each multimedia information content and a plurality of advertising multimedia information contents that correspond to each multimedia feature; determining whether one of the multimedia features matches the partial multimedia information content; if so, transmitting the advertising multimedia information content that corresponds to the matched multimedia feature to the display device, so as to display the corresponding advertising multimedia information content simultaneously with the multimedia information content; utilizing a selection unit for a user to select the corresponding advertising multimedia information content, and generate a selection signal; and generating an order information according to the selection signal, and transmit the order information to the cloud server to order a product corresponding the advertising multimedia information content.

Preferably, the partial multimedia information content may be an image feature or a current playback time of the multimedia information content, the multimedia features may be item features or predetermined points in time respectively, the determination of whether one of the multimedia features matches the partial multimedia information content further comprising the following steps of: determining whether the image feature matches one of the item features; or determining whether the current playback time of the multimedia information content matches one of the predetermined points in time.

Preferably, the product ordering method may further comprise the following steps of: generating order information comprising seating information and a product information corresponding the advertising multimedia information content; and providing the product to the user according to the seating information and the product information.

Preferably, the cloud server may store user information and login information of the user, and the display device may connect the cloud server according to the login information, the method may further comprise the following steps of: generating an order information comprising the user information and a product information corresponding the advertising multimedia information content; and providing the product to the user according to the user information and the product information.

With the above arrangements, the product ordering system and the product ordering method thereof according to the present invention have one or more of the following advantages:
(1) According to the product ordering system and the product ordering method thereof, due to the information link between the display device and the cloud server, the display device can display advertising multimedia information contents related to the multimedia information content displayed while displaying the multimedia information content at the same time, therefore raising the broadcast efficiency of the advertisements.
(2) According to the product ordering system and the product ordering method thereof, due to the information link between the display device, cloud server and the selection unit, the audience can purchase the advertised goods immediately while watching the advertising multimedia information contents, therefore the problem that the desire of purchase fade quickly due to the lack of purchase routs and unable to purchase right away can be solved.

### Brief description of the drawings

The exemplary embodiment(s) of the present invention will be understood more fully from the detailed description given below and from the accompanying drawings of various embodiments of the invention, which, however, should not be taken to limit the invention to the specific embodiments, but are for explanation and understanding only.
**FIG. 1** illustrates a block chart of the product ordering system according to the present invention.
**FIG. 2** illustrates a schematic view of the product ordering system according to the present invention.

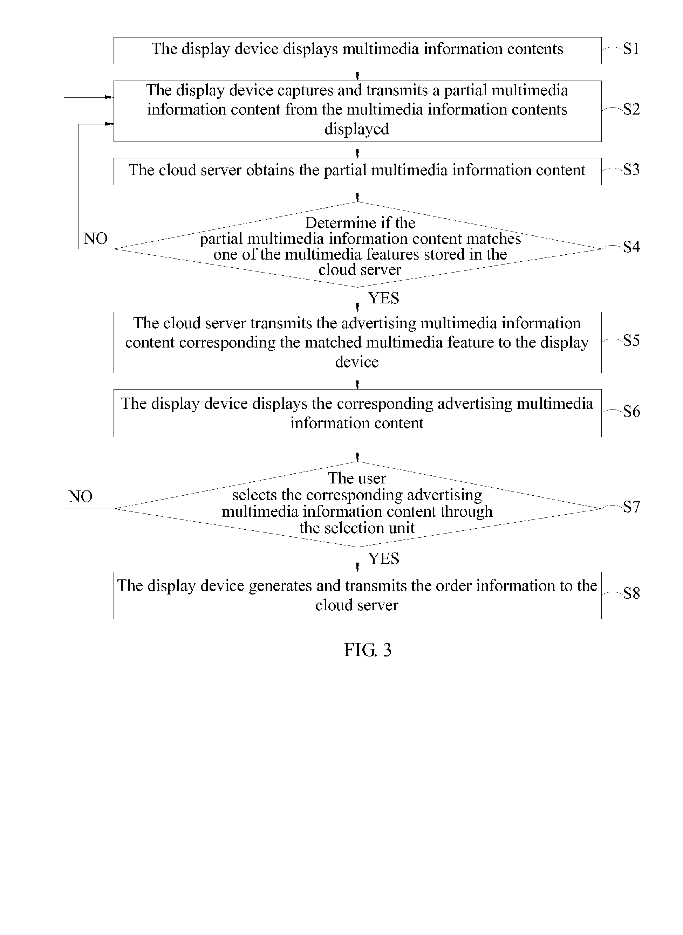

**FIG. 3** illustrates a flow chart of the product ordering system according to the present invention.
**FIG. 4** illustrates a flow chart of the first embodiment of the product ordering system according to the present invention.
**FIG. 5** illustrates a flow chart of the second embodiment of the product ordering system according to the present invention.

### Detailed Description

Exemplary embodiments of the present invention are described herein for better understandings of the technical features, contents, advantages and achievable effects thereof. The drawings used herein are illustrative only and are not intended to limit the actual scale and arrangements in practice of the present invention. Therefore the accompanying drawings should not be interpreted in any way limiting the scope of the present invention.

Reference will now be made in detail to implementations of the exemplary embodiment(s) of the product ordering system and the product ordering method thereof of the present invention as illustrated in the accompanying drawings. The same reference indicators will be used throughout the drawings and the following detailed description to refer to the same or like parts for better understanding.

In accordance with the embodiment(s) of the present invention, the components, process steps, and/or data structures described herein may be implemented using various types of operating systems, computing platforms, computer programs, and/or general purpose machines. In addition, those of ordinary skill in the art will recognize that devices of a less general purpose nature, such as hardwired devices, field programmable gate arrays (FPGAs), application specific integrated circuits (ASICs), or the like, may also be used without departing from the scope and spirit of the inventive concepts disclosed herein. Where a method comprising a series of process steps is implemented by a computer or a machine and those process steps can be stored as a series of instructions readable by the machine, they may be stored on a tangible medium such as a computer memory device (e.g., ROM (Read Only Memory), PROM (Programmable Read Only Memory), EEPROM (Electrically Erasable Programmable Read Only Memory), FLASH Memory, Jump Drive, and the like), magnetic storage medium (e.g., tape, magnetic disk drive, and the like), optical storage medium (e.g., CD-ROM, DVD-ROM, paper card and paper tape, and the like) and other known types of program memory.

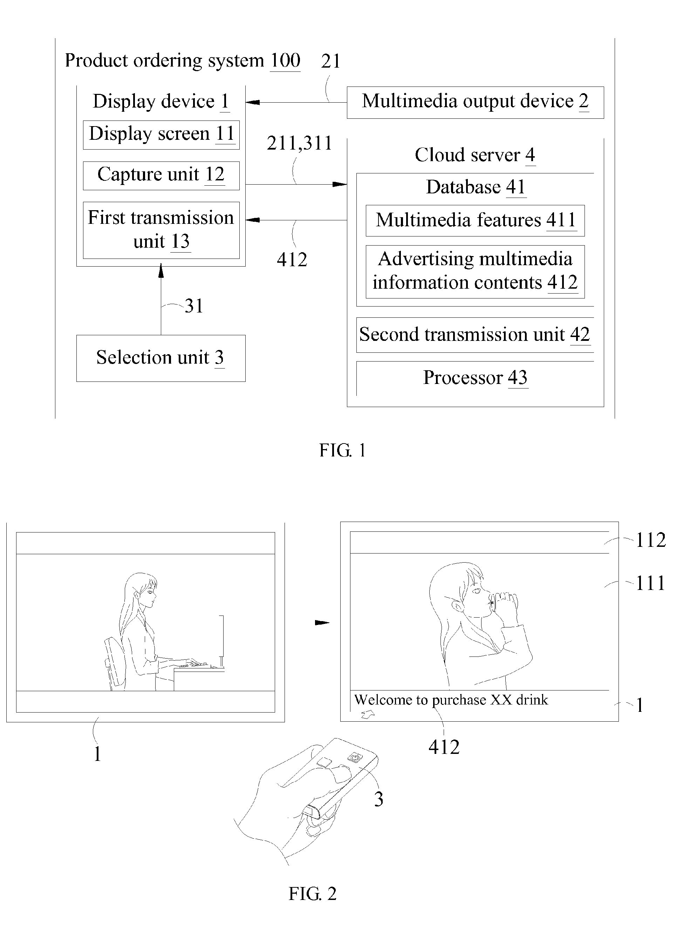

Please refer to FIG. 1∼3, which illustrate a block chart, a schematic view, and a flow chart of the product ordering system according to the present invention respectively. As shown in the FIG.s, product ordering system 100 comprising a display device 1, a selection unit 3 and a cloud server 4. The display device 1 comprising a display screen 11, a capture unit 12 and a first transmission unit 13, and is arranged to connect a multimedia output device 2 to obtain multimedia information contents 21. Wherein, the display screen 11 displays multimedia information contents 21 (step S1), and the capture unit 12 captures partial multimedia information content 211 from the multimedia information contents 21 displayed(step S2), and the partial multimedia information content 211 is transmitted by the first transmission unit 13. Wherein, the partial multimedia information content 211 captured by the capture unit 12 may be a partial image or a current playback time of the multimedia information contents 21 displayed. The selection unit 3 may be arranged to generate a selection signal 31.

The cloud server 4 comprising a database 41, a second transmission unit 42 and a processor 43. The database 41 may be arranged to store multimedia features 411 of the multimedia information contents 21 and advertising multimedia information contents 412 corresponding each multimedia features 411, and the second transmission unit 42 may be arranged to connect the internet or local area network through wired or wireless ways such as 3G or WIFI networks to connect the first transmission unit 13 and obtain the partial multimedia information content 211 (step S3). The processor 43 may be arranged to electrically connect the database 41 and the second transmission unit 42 to obtain the partial multimedia information content 211. The processor 43 compares the obtained partial multimedia information content 211 with the multimedia features 411, and when the processor 43 determines one of the multimedia features 411 that matches the partial multimedia information content 211 (step S4), the processor 43 controls the second transmission unit 42 to transmit the advertising multimedia information content 412 corresponding the matched multimedia feature 411 to the display device 1 (step S5), so as to display the corresponding advertising multimedia information content 412 on the display screen 11 (step S6). Wherein, when user selects the corresponding advertising multimedia information content 412 through the selection unit 3 (step S7), the display device 1 may generate an order information 311 according to the selection signal 31, and the first transmission unit 13 transmits the order information 311 to the cloud server 4 (step S8) to order the product corresponding the advertising multimedia information content 412.

In simple terms, when the display screen 11 is displaying the multimedia information contents 21, the capture unit 12 may capture a part of the multimedia information contents 21, the processor 43 of the cloud server 4 compares the partial multimedia information content 211 with the multimedia features 411 stored in the database 41, and transmits the advertising multimedia information content 412 corresponding to the multimedia feature 411 matching the partial multimedia information content 211 to the display device 1 to display on the display screen 11 at the same time.

It is worth mentioning that the display screen 11 may be a LCD screen having a display interface, the display interface may include a main display area 111 and at least one sub display area 112. The main display area 111 displays the multimedia information contents 21, while the sub display area 112 displays the corresponding advertising multimedia information contents 412, and both the multimedia information contents 21 and the corresponding advertising multimedia information contents 412 may be displayed simultaneously. Especially, when displaying the multimedia information contents 21, the sub display area 112 may display one or more corresponding advertising multimedia information contents 412 for the user to watch and purchase.

For example, when the display screen 11 is displaying a video, generally the display interface may be divided into the main display area 111 in the center which displays the video and the sub display areas 112 (such as the black bars) on the top and bottom sides of the main display area 111. When the main display area 111 is displaying the video, the sub display areas 112 on the top and bottom sides of the main display area 111 may display the corresponding advertising multimedia information contents 412, such as displaying an advertising multimedia information content 412 corresponding the food shown in the video on the sub display area 112 on the top side of the screen, and displaying an advertising multimedia information content 412 corresponding the clothing shown in the video on the sub display area 112 on the bottom side of the screen.

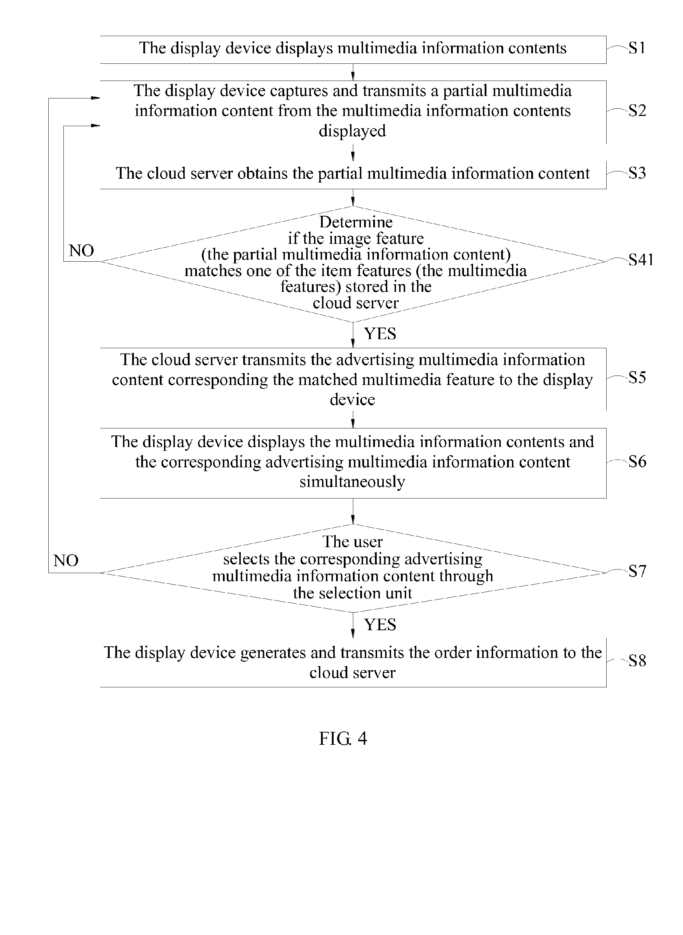

Please refer to FIG. 4, which illustrates a flow chart of the first embodiment of the product ordering system according to the present invention. In this embodiment, the arrangements of like parts are similar as the description above, so it will not be stated here again. The main difference of the present embodiment is about the use and applications of the capture unit 12 and the bases of displaying the corresponding advertising multimedia information contents 412.

In simple terms, capture unit 12 may be an image capture unit, the partial multimedia information content 211 may be an image feature, the multimedia features 411 are item features respectively, and the processor 43 may compare the image features with the item features to determine the item feature that matches the image feature (step S41).

For example, when the display screen 11 is displaying multimedia information contents 21 such as a movie, the capture unit 12 may capture image features from a single frame, a clip, or a food image or logo, and transmit to the cloud server 4 through the first transmission unit 13. For example, the capture unit 12 may capture a single frame or a clip of the movie, and the first transmission unit 13 may transmit the single frame or clip to the cloud server 4, then the processor 43 of the cloud server 4 may identify the image features of the single frame or clip and compare the image features with the item features. In another example, the capture unit 12 may capture image features from a single frame of the movie, and the display device 1 transmits the image features to the cloud server 4, then the processor 43 of the cloud server 4 may compare the image features with the item features. The image features of the present invention is not limited to food images or logos, the image features of the present invention may also be images of clothing, accessories, or furniture from the multimedia information contents 21, and the item features may include image information of brands, clothing, accessories, or furniture etc. of same or similar style of the image features. The processor 43 of the cloud server 4 may compare the image features such as food images with the item features, and determine the item features that match the image features. That is, the processor 43 may compare if the food images of the movie match the item features provided by vendors in the database 41. When an image feature matches one of the item features, the processor 43 may control the second transmission unit 42 to transmit the corresponding advertising multimedia information content 412 of this item feature to the display device 1, and display the advertising multimedia information content 412 on the display screen 11. In addition, when the display screen 11 displays the corresponding advertising multimedia information content 412, the user may select the corresponding advertising multimedia information content 412 displayed by the display screen 11 at the same time through the selection unit 3 such as a remote controller or touch screen, and when the user selected the corresponding advertising multimedia information content 412, the display device 1 may generate an order information 311 according to the selection signal, and the first transmission unit 13 may transmit the order information 311 to the cloud server 4, and the vendor may provide the corresponding product to the user according to the order information 311.

Additionally, the database 41 further stores user information and login information of the user, and the display device 1 connects the cloud server 4 according to the login information, then the user may watch the multimedia information contents 21 and the corresponding advertising multimedia information contents 412 through the display device 1. The order information 311 may comprise the user information and the product information of the corresponding advertising multimedia information contents 412, so that the supplier may provide the product to the user according to the user information and the product information received by the cloud server 4. For example, the supplier may send the product of the advertisement according to the address in the user information.

For example, the user information and the login information may be pre-stored in the database 41 and registered in the cloud server 4 using conventional methods such as filling the user information and the login information when the user register. Accordingly, when the user logs in the product ordering system and select the corresponding advertising multimedia information contents 412, the cloud server 4 may transmit the registered user information and the product information of the corresponding advertising multimedia information contents 412 to the vendor, so that the vendor may provide the corresponding product to the user according to the order information 311 including the user information and the product information.

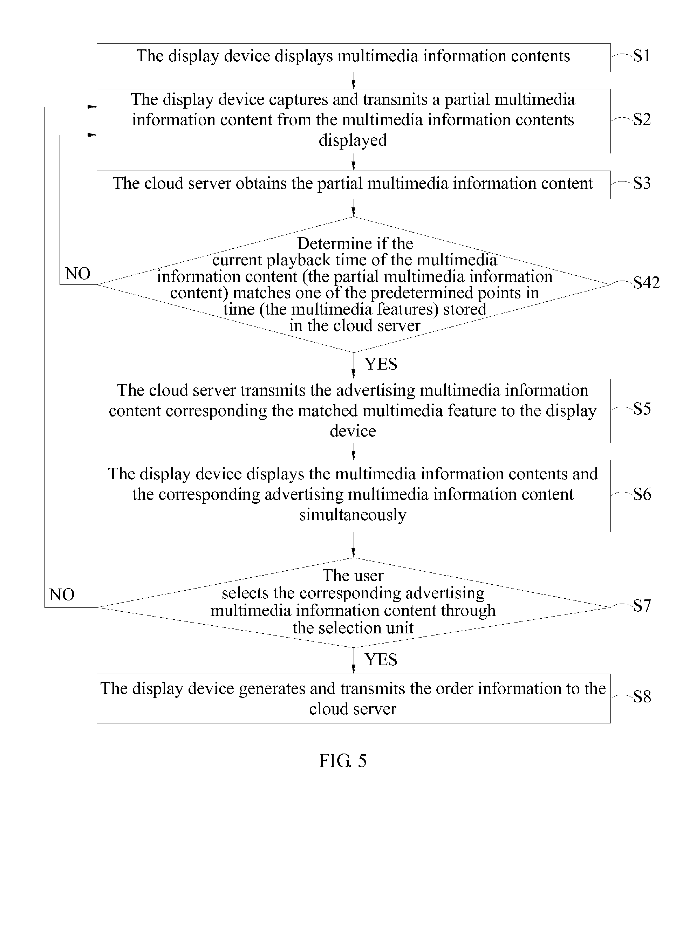

Please refer to FIG. 5, which illustrates a flow chart of the second embodiment of the product ordering system according to the present invention. The product ordering system 100 according to the present invention may serve as an example of a flight journey product ordering system. In this embodiment, the arrangements of like parts are similar as the former embodiment, so it will not be stated here again. The main difference of the present embodiment compared with the former embodiment is about the use and applications of the capture unit 12 and the bases of displaying the corresponding advertising multimedia information contents 412.

The capture unit may be a timer, the partial multimedia information content 211 may be a current playback time of the multimedia information content 21, the multimedia features may be a plurality of predetermined points in time respectively, and the processor 43 may compare the current playback time of the multimedia information content 21 with the predetermined points in time to determine the multimedia features 411 that matches the current playback time of the multimedia information content 21 (step S42), then the processor 43 may controls the second transmission unit 42 to transmit the advertising multimedia information content 412 corresponding the matched multimedia feature 411 to the display device 1, so as to display the corresponding advertising multimedia information content 412 on the display screen 11.

For example, if a video shows an image of a drink at a 30 minutes playback time, then set the predetermined point in time (as the multimedia features 411) of the advertising multimedia information contents 412 of the drink to 30 minutes. Therefore, when the display screen 11 is playing the video, the timer (as the capture unit 12) may capture the current playback time of the video, and the processor 43 may compare the current playback time with the predetermined points in time, when the current playback time of the video reaches the 30 minutes point, which matches the predetermined point in time (30 minutes) of the advertising multimedia information contents 412 of the drink, the processor 43 may controls the second transmission unit 42 to transmit the advertising multimedia information content 412 corresponding the matched predetermined point in time to the display device 1, so as to display the corresponding advertising multimedia information content 412 on the display screen 11 at the same time. In addition, when the display screen 11 displays the corresponding advertising multimedia information content 412, the user may select the corresponding advertising multimedia information content 412 displayed by the display screen 11 at the same time through the selection unit 3 such as a remote controller or touch screen, and when the user selected the corresponding advertising multimedia information content 412, the display device 1 may generate an order information 311 according to the selection signal, and the first transmission unit 13 may transmit the order information 311 to the cloud server 4, and the vendor may provide the corresponding product (the drink) to the user according to the order information 311.

It is worth mentioning that the order information 311 may include seating information and product information that corresponds to the advertising multimedia information contents 412, so that the supplier may provide the product to the user according to the seating information and the product information received by the cloud server 4.

For example, when the user on a flight journey selects the corresponding advertising multimedia information contents 412 displayed by the display device 1 using the selection unit 3 on the seat, the display device 1 may generate an order information 311 according to the selection signal, and the first transmission unit 13 may transmit the order information 311 including the seating information and the product information to the cloud server 4, and the flight attendants may provide the corresponding product of the advertising multimedia information contents 412 to the user according to the order information 311 displayed by the cloud server 4. However, the advertising multimedia information contents 412 of the present invention are not limited to purchasing use, but may also display information of coupons regarding the products for request. Therefore, when the user selected the corresponding advertising multimedia information content 412 displayed by the display device 1, the flight attendants may provide the corresponding coupons to the user.

Additionally, the product ordering system may also be used in other public transportations and hotels. For example, when the user is on a cruise, the user may use the selection unit 3 in the cabin to select the advertising multimedia information content 412 displayed by the display device 1, and the display device 1 may transmit the order information 311 including seating information (such as room number) and product information to the cloud server 4, and the room attendants may provide the corresponding product of the advertising multimedia information contents 412 to the user according to the order information 311 displayed by the cloud server 4.

The implementation of the steps of the product ordering method in accordance with the present invention has already been described in the description of the embodiments of the product ordering system according to the present invention, so the examples of the product ordering method of the present invention will not be stated here again.

The description above is illustrative only and is not intended to be limiting in any sense. Therefore, the appended claims are intended to encompass within their scope of all changes and modifications within the true spirit and scope of the exemplary embodiment(s) of the present invention.

## Claims

1. A product ordering system (100), comprising:
a display device (1) connected to a multimedia output device (2) so as to obtain a plurality of multimedia information contents (21), the display device (1) comprising a display screen (11),
a capture unit (12), and a first transmission unit (13); the display screen (11) displaying one of the multimedia information contents (21), the capture unit (12) capturing a partial multimedia information content (211) from the multimedia information content (21) displayed, and the partial multimedia information content (211) being transmitted by the first transmission unit (13);
a selection unit (3) generating a selection signal (31); and
a cloud server (4) connected to the display device (1), the cloud server (4) comprising:
a database (41) arranged to store multimedia features (411) of each multimedia information contents (21) and a plurality of advertising multimedia information contents (412) corresponding to the multimedia features (411);
a second transmission unit (42) arranged to receive the partial multimedia information content (211); and
a processor (43) electrically connected to the database (41) and the second transmission unit (42) and obtaining the partial multimedia information content (211) and comparing the partial multimedia information content (211) with the multimedia features (411), and
when the processor (43) determines that one of the multimedia features (411) matches the partial multimedia information content (211), the processor (43) controls the second transmission unit (42) to transmit the advertising multimedia information content (412) that corresponds to the matched multimedia feature (411) to the display device (1) to display the advertising multimedia information content (412);
wherein, when a user selects the advertising multimedia information content (412) through the selection unit (3), the display device (1) generates an order information (311) according to the selection signal (31), and the first transmission unit (13) transmits the order information (311) to the cloud server (4) to order a product corresponding the advertising multimedia information content (412).

2. The system of claim 1, wherein the capture unit (12) is an image capture unit (12), the partial multimedia information content (211) is an image feature, the multimedia features (411) are a plurality of item features, and the processor (43) compares the image feature with the item features to determine the item feature that matches the image feature.

3. The system of claim 1, wherein the capture unit (12) is a timer, the partial multimedia information content (211) is a current playback time of the multimedia information content (21), the multimedia features (411) are a plurality of predetermined points in time respectively, and the processor (43) compares the current playback time of the multimedia information content (21) with the predetermined points in time to determine the multimedia feature (411) that matches the current playback time of the multimedia information content (21).

4. The system of claim 2, wherein the display screen (11) is a display interface comprising a main display area (111) and at least one sub display area (112), the main display area (111) displaying the multimedia information content (21), the sub display area (112) displaying the corresponding advertising multimedia information content (412), and the multimedia information content (21) and the corresponding advertising multimedia information content (412) are displayed simultaneously.

5. The system of claim 4, wherein the order information (311) comprising a seating information and a product information that corresponds to the advertising multimedia information content (412), and a supplier provides the product to the user according to the seating information and the product information received by the cloud server (4).

6. The system of claim 4, wherein the database (41) further stores user information and login information of the user, the display device (1) connects the cloud server (4) according to the login information, the order information (311) comprising the user information and a product information of the corresponding advertising multimedia information content (412), and a supplier provides the product to the user according to the user information and the product information received by the cloud server (4).

7. A product ordering method, comprising the following steps of:
obtaining a plurality of multimedia information contents (21) by connecting a display device (1) to a multimedia output device (2), display one of the multimedia information contents (21), and capture and transmit a partial multimedia information content (211) of the multimedia information content (21) displayed;
arranging a cloud server (4) to receive the partial multimedia information content (211) from the display device (1) and store multimedia features (411) of each multimedia information content (21) and a plurality of advertising multimedia information contents (412) that correspond to each multimedia feature (411);
determining whether one of the multimedia features (411) matches the partial multimedia information content (211);
if so, transmitting the advertising multimedia information content (412) that corresponds to the matched multimedia feature (411) to the display device (1), so as to display the corresponding advertising multimedia information content (412) simultaneously with the multimedia information content (21);
utilizing a selection unit (3) for a user to select the corresponding advertising multimedia information content (412), and generate a selection signal (31); and
generating an order information (311) according to the selection signal (31), and transmit the order information (311) to the cloud server (4) to order a product corresponding the advertising multimedia information content (412).

8. The method of claim 7, wherein the partial multimedia information content (211) is an image feature or a current playback time of the multimedia information content (21), the multimedia features (411) are item features or predetermined points in time, the determination of whether one of the multimedia features (411) matches the partial multimedia information content (211) further comprising the following steps of:
determining whether the image feature matches one of the item features; or
determining whether the current playback time of the multimedia information content (21) matches one of the predetermined points in time.

9. The method of claim 7, further comprising the following steps of:
generating an order information (311) comprising a seating information and a product information corresponding the advertising multimedia information content (412); and
providing the product to the user according to the seating information and the product information.

10. The method of claim 7, wherein the cloud server (4) stores user information and login information of the user, and the display device (1) connects the cloud server (4) according to the login information, the method further comprising the following steps of:
generating an order information (311) comprising the user information and a product information corresponding the advertising multimedia information content (412); and
providing the product to the user according to the user information and the product information.
